# EUROPÄISCHE PATENTSCHRIFT

(11) **EP 2 588 352 B1**
(45) Veröffentlichungstag und Bekanntmachung des Hinweises auf die Patenterteilung: **26.04.2017**
(21) Anmeldenummer: 11729312.6
(22) Anmeldetag: 04.07.2011
(51) Int. Cl.: B60S 1/38, B60S 1/40

(54) **ANSCHLUSSVORRICHTUNG ZUM GELENKIGEN VERBINDEN EINES WISCHARMS MIT EINEM WISCHBLATT**
CONNECTING DEVICE FOR CONNECTING A WIPER ARM TO A WIPER BLADE IN AN ARTICULATED MANNER
DISPOSITIF DE RACCORDEMENT DESTINÉ À RELIER DE MANIÈRE ARTICULÉE UN BRAS D'ESSUIE-GLACE À UN BALAI D'ESSUIE-GLACE

(30) Priorität: 02.07.2010 DE 102010030880
(43) Veröffentlichungstag der Anmeldung: 08.05.2013
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2011/061228
(87) Internationale Veröffentlichungsnummer: WO 2012/001175

(56) Entgegenhaltungen:
- WO-A1-2011/120723
- DE-A1- 10 259 481
- DE-A1- 10 349 637
- DE-A1-102009 014 700
- JP-A- 2007 331 493
- US-A1- 2009 007 364

## Beschreibung

### Stand der Technik

Die Erfindung geht von einer Anschlussvorrichtung zum gelenkigen Verbinden eines Wischarms mit einem Wischblatt nach dem Oberbegriff des Anspruchs 1 aus.

Aus der DE 20 2005 021 307 U1 ist eine Anschlussvorrichtung zum gelenkigen Verbinden eines Wischblatts in Flachbalkenbauweise bekannt, die für verschiedene Wischarme geeignet ist. Die Anschlussvorrichtung umfasst mindestens ein einteiliges oder mehrteiliges Anschlusselement, das fest, aber lösbar mit einem Tragelement des Wischblatts in Form von Federschienen befestigt ist. Zwischen je einem Wischarm und dem Wischblatt ist ein Adapter vorgesehen, der einerseits Anschlussmöglichkeiten für das Anschlusselement und andererseits Anschlussmöglichkeiten für einen der Wischarme bzw. für entsprechende Verbindungselemente besitzt, die mit dem jeweiligen Wischarm fest verbunden oder an diesem angeformt sind. Ein Gelenk, dessen Gelenkachse sich quer zur Längsrichtung des Wischblatts erstreckt, ist zwischen einem der Verbindungselemente und einem Adapter angeordnet, der drehfest mit dem Anschlusselement oder alternativ zwischen einem mit dem Anschlusselement drehfest verbundenen Teil des Adapters und einem mit dem Verbindungselement drehfest verbundenen Teil des Adapters verbunden ist. Somit ergeben sich drei verschiedene Adapter für drei verschiedene Verbindungselemente der Wischarme.

Die Anschlussvorrichtung eignet sich für einen Wischarm mit einem hakenförmigen Ende bzw. Verbindungselement oder einem Ende bzw. Verbindungselement mit einem seitlichen Lagerstift und einer Brücke entsprechend einem bekannten Sidelockprinzip oder einem Wischarm mit einem Ende bzw. Verbindungselement, bei dem der Wischarm im Wesentlichen gradlinig oberhalb des Wischblatts verläuft und nach dem Toplock-Prinzip mit dem Anschlusselement verbunden ist.

Eine andere Anschlussvorrichtung zum gelenkigen Verbinden eines Wischblatts mit einem Wischarm ist aus der DE 103 47 637 A1 bekannt. Hierbei besitzt ein Anschlusselement in Form einer Blechkralle einen mittleren Längssteg, der vom Tragelement des Wischblatts weg weist, und in den eine quer verlaufende Schwenkachse drehfest eingesetzt ist. Auf der zu beiden Seiten des Längsstegs frei tragend vorstehende Schwenkachse ist ein Adapter mit Lageröffnungen schwenkbar gelagert, die in seitlichen Federzungen angeordnet sind. Der Adapter, der aus Kunststoff gefertigt ist, umfasst die Blechkralle von außen und wird mittels Rastelementen und Halteelementen in ein zum Wischblatt hin offenes Verbindungselement eingeklippst, das fest mit dem Wischarm verbunden ist. Der Adapter ist zum einen durch innere Führungsstege seitlich auf dem Längssteg der Blechkralle geführt und zum anderen an seinen Seitenwänden spielfrei im Verbindungselement eingesetzt. Hierzu dient eine Taste, die am Ende einer Federzunge in einer Deckwand des Adapters vorgesehen ist und im montierten Zustand in ein passendes Rastloch einer Deckwand des Verbindungselements einrastet.

Aus der DE 102 59 481 A1 ist eine Anschlussvorrichtung zum gelenkigen Verbinden eines Verbindungselements eines Wischarms mit einem Wischblatt, dessen Tragelement mit einem Anschlusselement der Anschlussvorrichtung fest verbunden ist, bekannt, wobei das Anschlusselement mindestens einen in Längsrichtung verlaufenden Lagersteg besitzt, der in das Innere eines Adapters ragt und einen quer zur Längsrichtung verlaufenden Lagerstift trägt, auf dem der Adapter durch Lagermittel schwenkbar gelagert ist, wobei der Adapter lösbar mit dem Verbindungselement verbunden ist.

### Offenbarung der Erfindung

Die Erfindung geht aus von einer Anschlussvorrichtung zum gelenkigen Verbinden eines Verbindungselements eines Wischarms mit einem Wischblatt, dessen Tragelement mit einem Anschlusselement der Anschlussvorrichtung fest verbunden ist, wobei das Anschlusselement mindestens einen in Längsrichtung verlaufenden Lagersteg besitzt, der in das Innere eines Adapters ragt und einen quer zur Längsrichtung verlaufenden Lagerstift trägt, auf dem der Adapter durch Lagermittel schwenkbar gelagert ist, wobei der Adapter lösbar mit dem Verbindungselement verbunden ist, wobei der Lagersteg an einer Längsseite eines Bodens des Anschlusselements nur in einem kurzen Bereich am äußeren Ende des Anschlusselements angeformt ist und der Lagerstift zur anderen Längsseite des Bodens hin frei tragend am Lagersteg befestigt ist, während ein Seitensteg an der anderen Längsseite des Bodens zum inneren Ende des Anschlusselements versetzt angeformt ist, wobei mit dem zum äußeren Ende des Wischblatts weisenden Ende des Adapters eine Lagerhülse fest verbunden ist, die auf dem Lagerstift drehbar lagerbar ist und von einer im Querschnitt winkligen Klappe überdeckt wird, die über ein in Längsrichtung des Adapters verlaufendes Filmscharnier mit dem übrigen Adapter gelenkig verbunden ist und im geschlossenen Zustand die Lagerhülse axial auf dem Lagerstift sichert. Nach der Erfindung erstreckt sich eine Klappe eines zweiten und dritten Adapters über die gesamte Länge des zweiten bzw. dritten Adapters. Das Anschlusselement der erfindungsgemäßen Anschlussvorrichtung ist in vorteilhafter Weise so gestaltet, dass es in Verbindung mit fünf Adaptern eine gelenkige Verbindung des Wischblatts mit zehn unterschiedlichen Verbindungselementen von zehn unterschiedlichen Wischarmen ermöglicht. Dadurch kann ein Wischblatt mit einer sehr geringen Bauteilevielfalt einen großen Anwendungsbereich verschiedener Wischarme abdecken.

Hierzu ist es zweckmäßig, dass der Seitensteg durch einen senkrecht zum Tragelement verlaufenden Spalt geteilt ist. Ferner weist der Seitensteg in dem zum äußeren Ende des Wischblatts weisenden Teil eine Aussparung auf. Diese Ausgestaltungen des Seitensteges ermöglichen eine leichte Fixierung und gute seitliche Führung der Adapter relativ zum Anschlusselement und damit zum Wischblatt.

Die gelenkige Verbindung der Adapter mit dem Anschlusselement erfolgt bei allen Ausführungen in der gleichen Weise, nämlich dadurch, dass mit dem zum äußeren Ende des Wischblatts weisenden Ende des Adapters eine Lagerhülse fest verbunden ist, die auf dem Lagerstift drehbar lagerbar ist. Eine im Querschnitt winklige Klappe, die über ein in Längsrichtung verlaufendes Filmscharnier mit dem übrigen Adapter gelenkig verbunden ist, überdeckt die Lagerhülse und sichert diese im geschlossenen Zustand auf dem Lagerstift, z.B. indem sie mit dem abgewinkelten Ende den Lagersteg übergreift und an einer Kante des Adapters verrastet.

Die Ausgestaltungen der fünf Adapter unterscheiden sich unter anderem durch die Klappen, die den Adapter in axialer Richtung auf dem Lagerstift des Anschlusselements sichern. Während bei dem ersten Adapter, dem vierten und fünften Adapter die Klappe im Wesentlichen nur den Bereich des Lagerstegs und der Lagerhülse abdeckt, erstreckt sich die Klappe des zweiten und dritten Adapters über die gesamte Länge des Adapters.

Um den nicht beanspruchten ersten Adapter mit einem ersten Verbindungselement zu verbinden, besitzt sein Grundelement am Übergang von der Klappe zum übrigen Teil des Grundelements eine nach außen vorstehende Anlagekante, an die eine vordere Stirnkante des ersten Verbindungselements sich abstützen kann, wenn das Verbindungselement stirnseitig vom inneren Ende des ersten Adapters auf diesen aufgeschoben wird. Als Innenseite bzw. inneres Ende des Wischblatts oder seiner Bauelemente wird das Ende bezeichnet, dass bei einer Wischbewegung eine innere Bahn auf einer Fahrzeugscheibe beschreibt, während das entgegengesetzte Ende als äußeres Ende bezeichnet wird. Zweckmäßigerweise weist die Anlagekante an den Seitenwänden der Klappe Taschen auf, die in Längsrichtung konkav gestaltet sind und mit entsprechend konvex gestalteten Stirnkanten des ersten Verbindungselements zusammenwirken. Um eine ungewollte Demontage des ersten Verbindungselements zu verhindern, besitzt das Grundelement zweckmäßigerweise an seinem inneren Ende in seiner Deckwand eine Federzunge mit einer Taste, die außen gegenüber der Deckwand des Grundelements vorsteht und in montiertem Zustand des ersten Verbindungselements in eine Rastöffnung des Verbindungselements einrastet.

Zum Verbinden eines zweiten Verbindungselements mit dem ersten Adapter wird auf diesen eine Abdeckkappe gesetzt, die im Wesentlichen eine gleiche Konfiguration besitzt wie das vordere Ende des ersten Verbindungselements. Die Abdeckkappe wird in Längsrichtung zwischen der Anlagekante und der Taste fixiert, die in eine Rastöffnung in einer Deckwand der Abdeckkappe einrastet. Die Abdeckkappe schließt sich bündig an das Grundelement an und weist mindestens in einer Seitenwand eine Lageröffnung auf, die in montiertem Zustand der Abdeckkappe mit einer Lageröffnung in der Seitenwand des Grundelements fluchtet. Das zweite Verbindungselement ist mit einem Lagerpin in den Lageröffnungen der Abdeckkappe und des Grundelements gehalten und wird in axialer Richtung des Lagerpins durch eine Brücke fixiert, die in montiertem Zustand die Abdeckkappe übergreift und mit einem abgewinkelten Ende hält, sodass die Schwenkbewegung zwischen dem Wischblatt und dem Wischarm ausschließlich durch das Gelenk ermöglicht wird, das durch den Lagerstift des Anschlusselements und durch die Lagerhülse des ersten Adapters gebildet wird. Der nicht beanspruchte vierte Adapter ist ähnlich aufgebaut wie der erste Adapter und dient zum gelenkigen Verbinden des Wischblatts mit einem siebten und achten Verbindungselement, die dem ersten und zweiten Verbindungselement ähneln. Während das erste Verbindungselement gekröpft ist, sodass der Wischarm seitlich versetzt zum Wischblatt verläuft, verläuft der Wischarm des siebten Verbindungselements oberhalb des Wischblatts. Das siebte Verbindungselement ist in Bezug auf den vierten Adapter zwischen einer Anlagekante und einer Taste in Längsrichtung fixiert, die in ein Rastloch in der Deckwand des siebten Verbindungselements eingreift und verrastet. Zum äußeren Ende hin hinter der Taste des Grundelements besitzt das Grundelement des vierten Adapters eine Vertiefung, in die eine Brücke des achten Verbindungselements in montiertem Zustand eingreift, sodass die äußere Kontur der Brücke im montierten Zustand mit der äußeren Kontur einer Abdeckkappe bzw. der Taste weit gehend bündig abschließt, wobei die Brücke durch eine quer verlaufende Öffnung in der Deckwand der Abdeckkappe in die Vertiefung des Grundelements des vierten Adapters reicht. Diese Öffnung erstreckt sich ein Stück weit über die angrenzenden Seitenwände der Kappe, sodass ein abgewinkeltes Ende der Brücke an dem Grundelement des Adapters Halt findet. Die Abdeckkappe und das Grundelement haben mindestens auf einer Seite zueinander fluchtende Lageröffnungen für einen Lagerpin des achten Verbindungselements.

Die Adapter zwei und drei besitzen eine Klappe, die sich über die gesamte Länge des Adapters erstrecken. Bei geöffneter Klappe können mit dem zweiten Adapter die dritten und vierten Verbindungselemente verbunden werden. Hierzu besitzt der zweite Adapter an der Innenseite seiner mit der Lagerhülse verbundenen Seitenwand ein in Längsrichtung verlaufendes Aufnahmeprofil, auf das in Richtung der Lagerhülse von der freien Seite das dritte Verbindungselement mit einem hakenförmigen Ende aufgeschoben werden kann. Nach seiner Montage wird die Klappe geschlossen, sodass der dritte Adapter einerseits auf dem Lagerstift des Anschlusselements und andererseits auf dem Aufnahmeprofil des zweiten Adapters gesichert ist. Zweckmäßigerweise verläuft mit Abstand zur äußeren Kontur des Aufnahmeprofils ein Halterahmen, der mit der Seitenwand des zweiten Adapters verbunden ist und das Bewegungsspiel zwischen dem Aufnahmeprofil und dem dritten Verbindungselement begrenzt. Vorteilhafterweise kann das Aufnahmeprofil über eine Federzunge mit der Seitenwand verbunden sein, sodass das dritte Verbindungselement spielfrei zur Seitenwand der Klappe fixiert ist.

In vorteilhafter Weise ist das Aufnahmeprofil ein Hohlprofil, dessen eine Seite offen ist und zur Seitenwand der Klappe weist. Am inneren Ende des Hohlprofils befindet sich ein quer verlaufendes Rastprofil für die Aufnahme eines quer zu Längsrichtung des Wischblatts verlaufenden Lagerpins des vierten Verbindungselements. In geschlossenem Zustand der Klappe fluchtet eine Öffnung in der Seitenwand der Klappe mit dem Rastprofil, sodass der Lagerpin des vierten Verbindungselements durch die Öffnung der Seitenwand in das Rastprofil eingesetzt werden kann.

Bei dem dritten Adapter ist anstelle des Aufnahmeprofils ein Führungsblock an der Seitenwand befestigt, die der Seitenwand der Klappe gegenüberliegt. Der Führungsblock sieht Aufnahmemöglichkeiten für ein fünftes, sechstes und siebtes Verbindungselement vor. Dafür ist am äußeren Ende mit einem Abstand zum Führungsblock im Bereich der Lagerhülse eine zur Deckwand der Klappe offene Haltezange angeordnet, deren Schenkel einen Spalt bilden. Zwischen den Schenkeln findet eine Lasche des fünften und sechsten Verbindungselements bzw. ein gekröpftes Ende des siebten Verbindungselements Platz und wird dort durch Rastnocken an den Enden der Schenkel gehalten.

Zur axialen Fixierung des fünften Verbindungselements sind an den Außenseiten der Seitenwände des Führungsblocks an den zum Tragelement des Wischblatts weisenden Kanten Anlageborde vorgesehen, die im Bereich ihres zum inneren Ende des Wischblatt weisenden Endes jeweils eine Aussparung mit einem Rast- und Anlagenocken besitzen. In diese Aussparungen passen Vorsprünge an den Seitenwänden des fünften und sechsten Verbindungselements. Die Vorsprünge des fünften Verbindungselements haben Hinterschneidungen, die an Schrägen der Rast- und Anlagenocken anliegen, während Vorsprünge an den Seitenwänden des sechsten Verbindungselements ohne Hinterschneidungen an Anlageflächen der Rast- und Anlagenocken anliegen. In diesem Fall greift ein Rastnocken an der Deckwand des Führungsblocks in eine entsprechende Öffnung des sechsten Verbindungselements ein.

Das siebte Verbindungselement wird an dem gleichen Rastnocken fixiert, der in ein Rastloch des siebten Verbindungselements eingreift. Seitlich wird das siebte Verbindungselement geführt, indem die Seitenwände des Führungsblocks gegenüber der Deckwand einen Überstand bilden, sodass zwischen ihnen eine seitliche Führung entsteht. Der nicht beanspruchte fünfte Adapter dient zum gelenkigen Verbinden eines neunten und zehnten Verbindungselements mit dem Wischblatt. Er ähnelt im Aufbau dem ersten und vierten Adapter. Hierzu besitzt ein Grundelement des fünften Adapters einen in Längsrichtung verlaufenden Führungsblock, der eine quer verlaufende, sich zum Boden des Anschlusselements verjüngende Lücke aufweist, in die eine offene Nabe einer Abdeckkappe mit einer entsprechenden Außenkontur einsetzbar ist, wobei eine Deckwand einer Klappe des Grundelements im geschlossenen Zustand die Lücke und die Nabe ein Stück weit überdeckt. Zur Montage des neunten Verbindungselements wird die Abdeckkappe entfernt und die Profilwalze des zehnten Verbindungselements unmittelbar in die entsprechende Lücke des Führungsblocks eingesetzt, wobei seitliche Führungswangen das neunte Verbindungselement an den Seitenwänden des Führungsblocks geführt sind.

Zur Montage des zehnten Verbindungselements wird die Abdeckkappe in die Lücke des Führungsblocks eingesetzt und der Lagerpin in die offene Nabe der Abdeckkappe eingesetzt. Dazu hat der Lagerpin zweckmäßigerweise zwei einander gegenüberliegende Abflachungen, sodass der Lagerpin durch eine gegenüber dem Durchmesser der offenen Narbe verringerte Öffnung eingesetzt werden kann und durch Verdrehen in die Betriebsposition gesichert wird. In axialer Richtung des Lagerpins ist das zehnte Verbindungselement durch eine am freien Ende des Lagerpins vorgesehene Riegelplatte gesichert.

Von dem Schutz der Ansprüche wird nicht nur die Anschlussvorrichtung, umfassend das Anschlusselement und den Adapter gegebenenfalls mit der Abdeckklappe, erfasst, sondern auch ein Wischblatt mit einer erfindungsgemäßen Anschlussvorrichtung und der zweite und dritte Adapter gegebenenfalls mit ihren Abdeckkappen als Einzelelemente.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine Zusammenstellung von drei Adaptern, die mit einem Anschlusselement eine erfindungsgemäße Anschlussvorrichtung für sieben verschiedene Verbindungselemente entsprechender Wischarme bilden,
Fig. 2 eine perspektivische Ansicht eines Wischblatts mit einem Anschlusselement einer erfindungsgemäßen Anschlussvorrichtung,

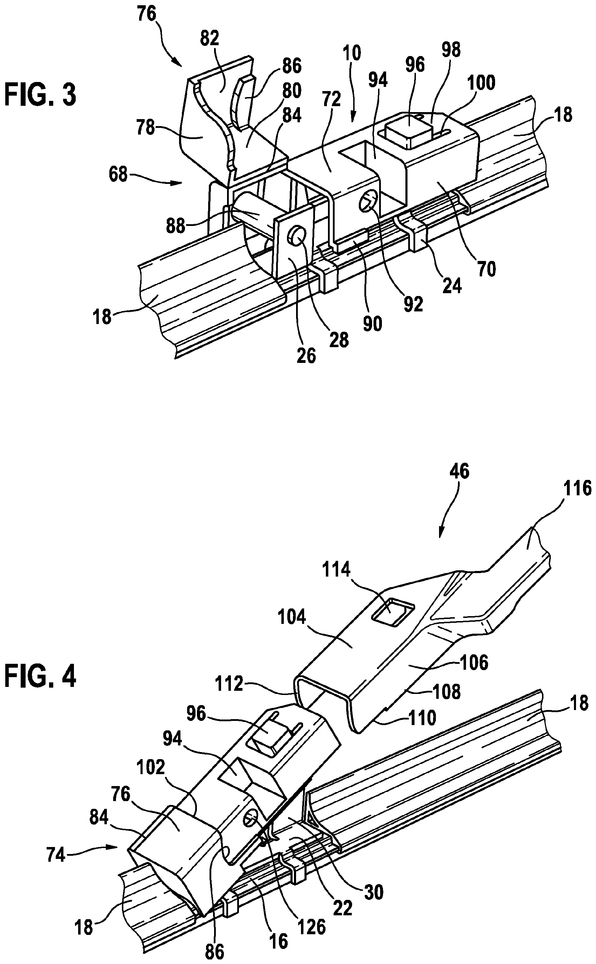

Fig. 3 eine perspektivische Ansicht eines Wischblatts mit einer Anschlussvorrichtung mit einem ersten nicht beanspruchten Adapter,
Fig. 4 eine perspektivische Ansicht eines Wischblatts nach Fig. 3 bei der Montage eines ersten Verbindungselements,

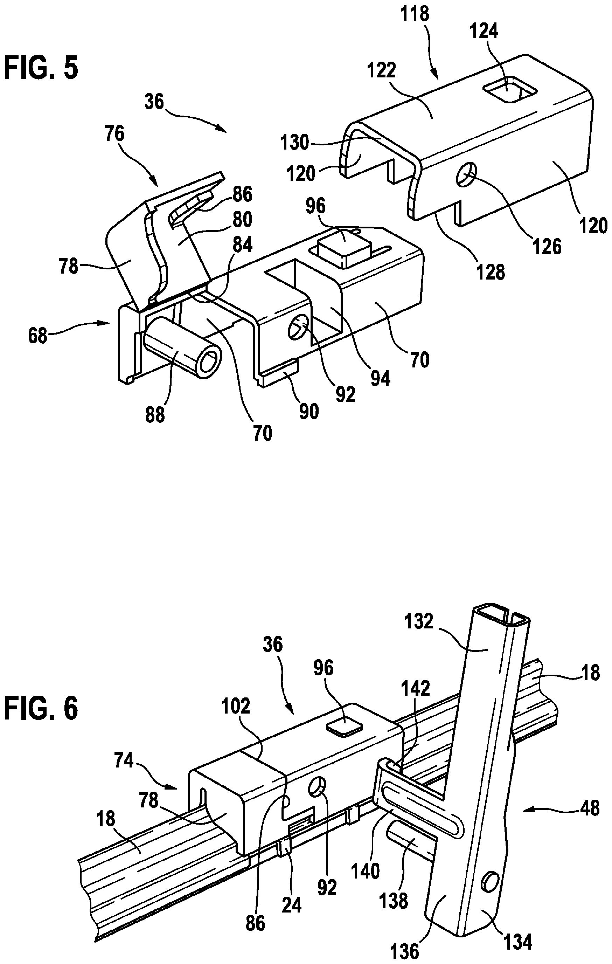

Fig. 5 eine Explosionsdarstellung eines ersten nicht beanspruchten Adapters mit einer Abdeckkappe,
Fig. 6 eine perspektivische Ansicht eines Wischblatts mit einem montierten ersten Adapter mit einer Abdeckkappe während der Montage eines zweiten Verbindungselements,

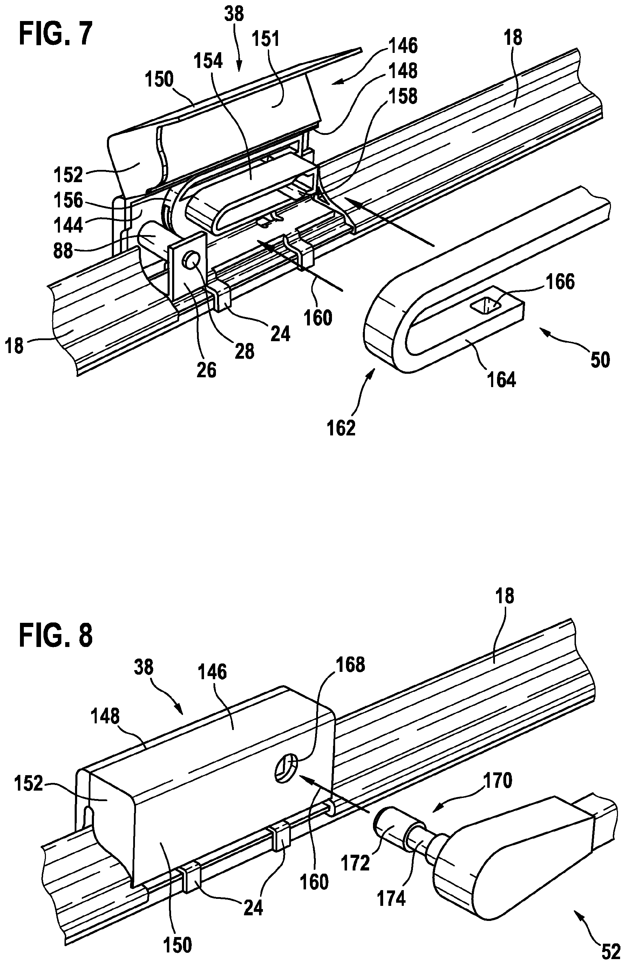

Fig. 7 eine perspektivische Ansicht eines Wischblatts mit einem zweiten Adapter während der Montage eines dritten Verbindungselements,
Fig. 8 ein Wischblatt nach Fig. 7 während der Montage eines vierten Verbindungselements,

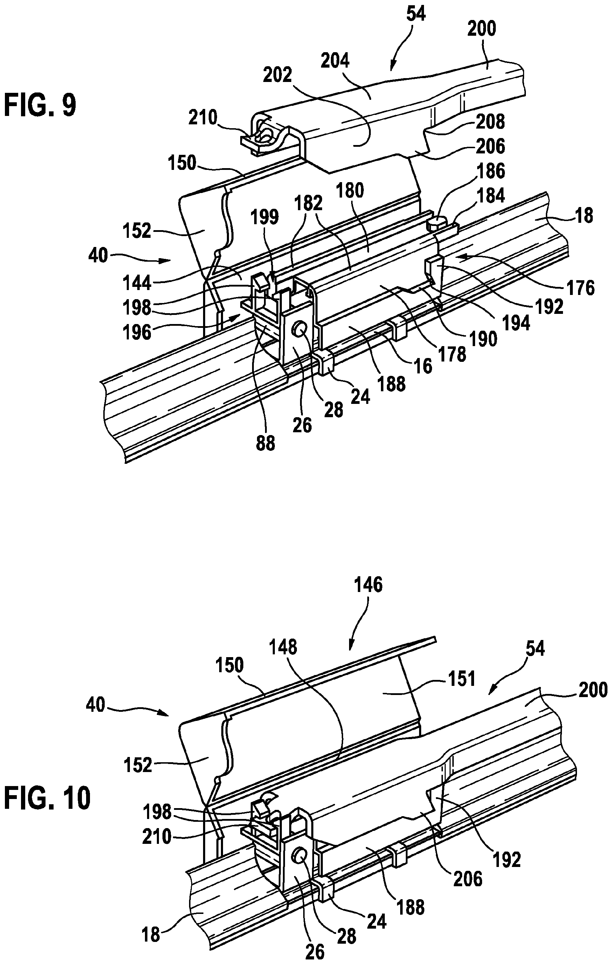

Fig. 9 eine perspektivische Ansicht eines Wischblatts mit einem dritten Adapter während der Montage eines fünften Verbindungselements,
Fig. 10 ein Wischblatt nach Fig. 9 mit einem montierten fünften Verbindungselement,

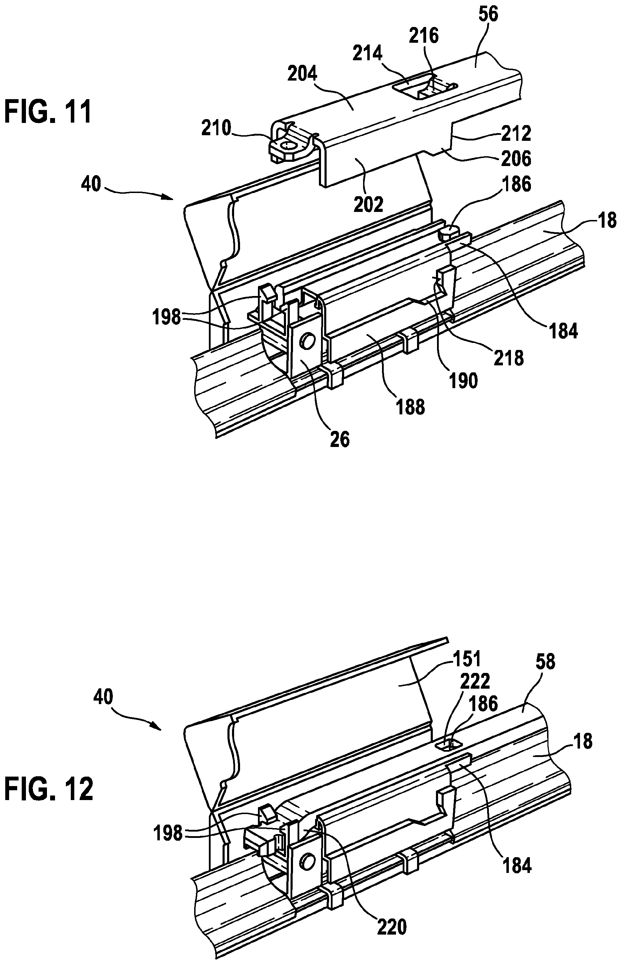

Fig. 11 eine Variante zu Fig. 9,
Fig. 12 eine Variante zu Fig. 10,
Fig. 13 eine Zusammenstellung von zwei weiteren nicht beanspruchten Adaptern, die mit dem Anschlusselement eine erfindungsgemäße Anschlussvorrichtung für weitere vier verschiedene Verbindungselemente entsprechender Wischarme bilden,
Fig. 14 eine Explosionsdarstellung eines vierten nicht beanspruchten Adapters mit einer Abdeckkappe,

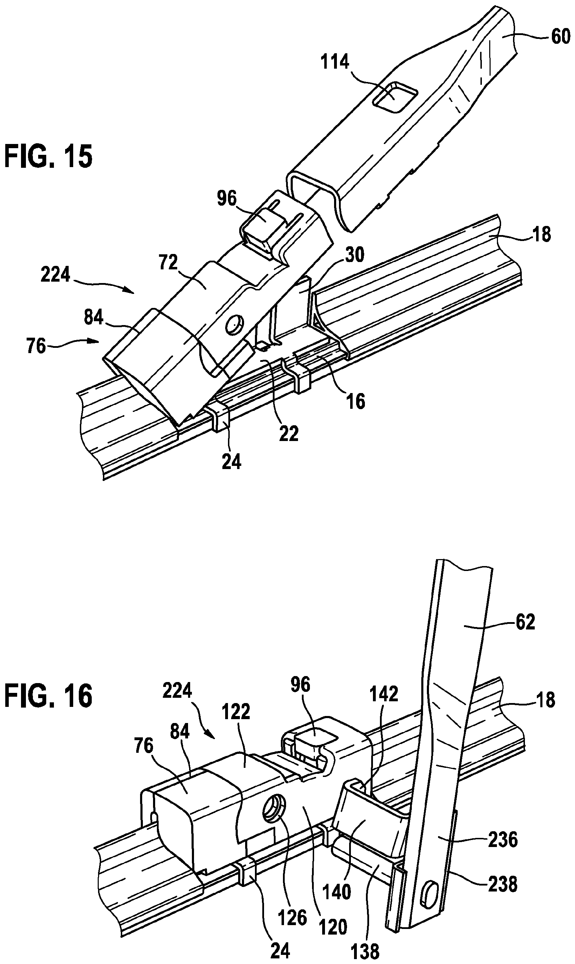

Fig. 15 eine perspektivische Ansicht eines Wischblatts mit einer Anschlussvorrichtung mit einem Grundelement des vierten Adapters während der Montage eines achten Verbindungselements,
Fig. 16 eine perspektivische Ansicht eines Wischblatts mit einer Anschlussvorrichtung mit dem vierten Adapter während der Montage mit einem neunten Verbindungselement,

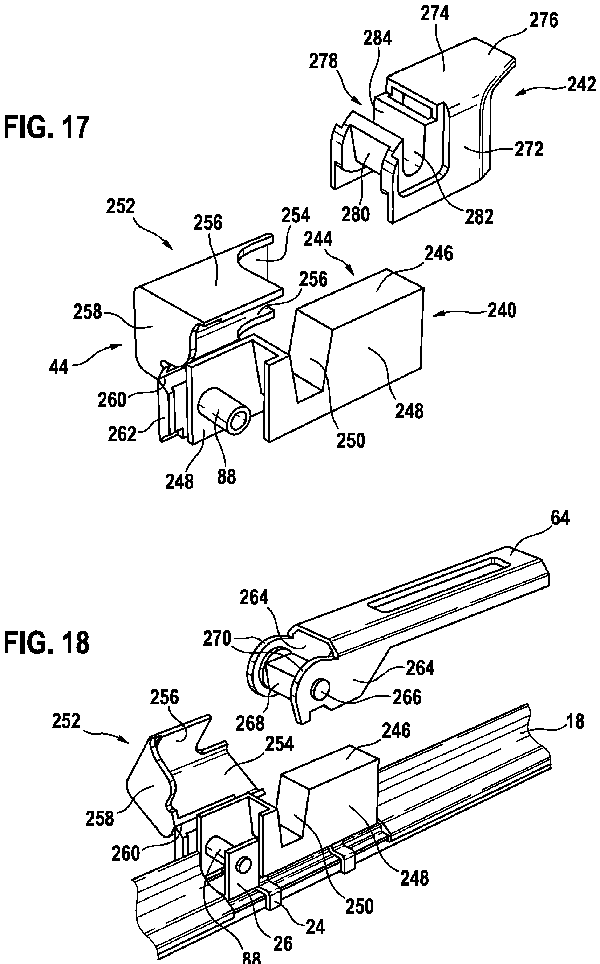

Fig. 17 eine Explosionsdarstellung eines fünften nicht beanspruchten Adapters mit einer Abdeckkappe,
Fig. 18 eine perspektivische Ansicht eines Wischblatts mit dem Grundelement des fünften Adapters während der Montage eines zehnten Verbindungselements,

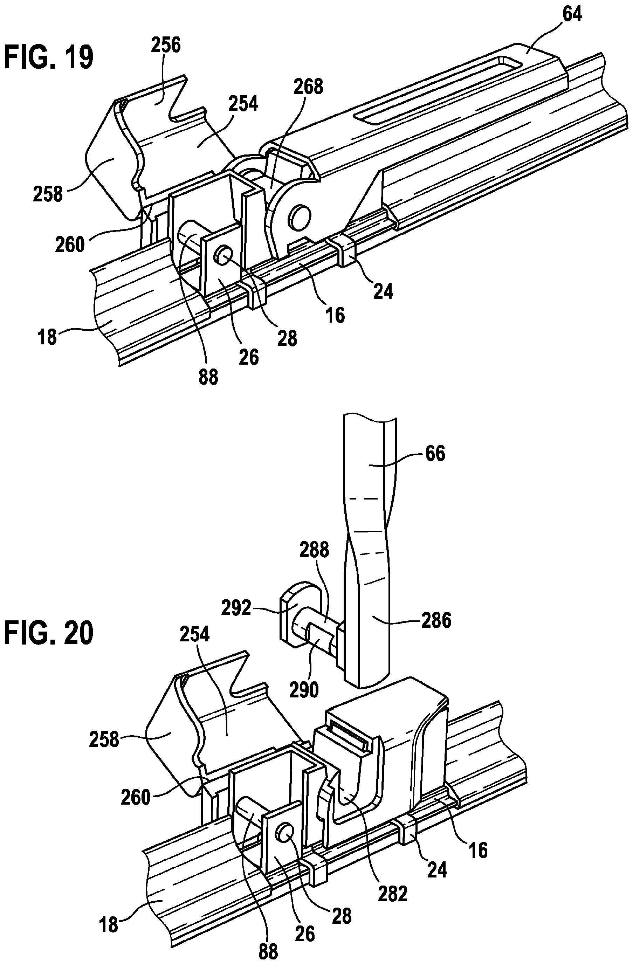

Fig. 19 ein Wischblatt nach Fig. 18 mit dem montierten zehnten Verbindungselement und
Fig. 20 eine perspektivische Ansicht eines Wischblatts mit dem fünften Adapter und der zugehörigen Abdeckkappe während der Montage eines ersten Verbindungselements.

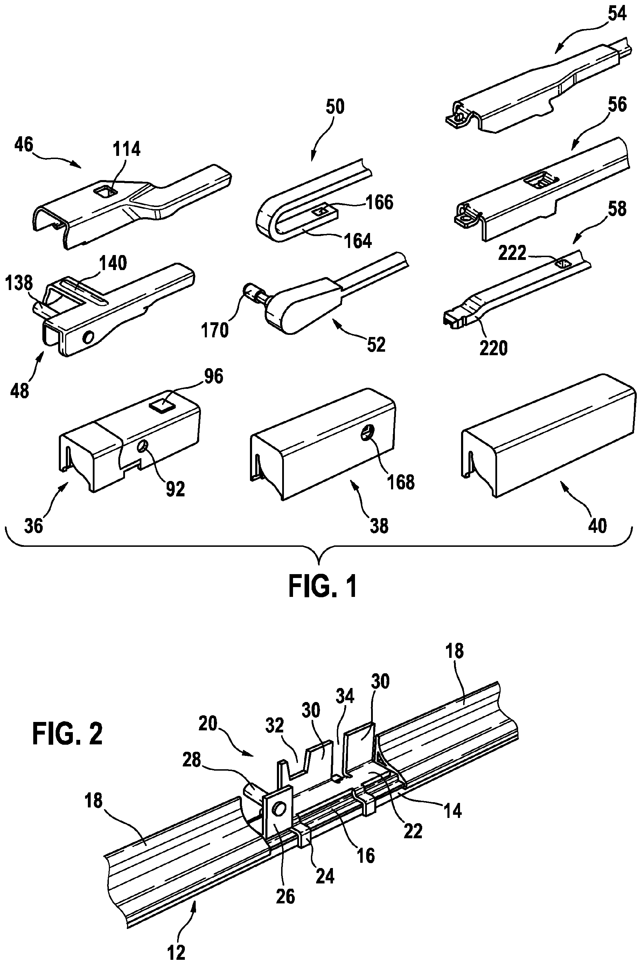

Eine erfindungsgemäße Anschlussvorrichtung 10 umfasst ein Anschlusselement 20 (Fig. 2), das fest mit einem Wischblatt 12 verbunden ist und für alle Ausgestaltungen gleich ist, und je nach Ausgestaltung einen ersten Adapter 36, einen zweiten Adapter 38, einen dritten Adapter 40, einen vierten Adapter 42 oder einen fünften Adapter 44. Allen Adaptern 36, 38, 40, 42, 44 ist gemeinsam, dass sie jeweils eine Klappe 76, 146 oder 252, die einen winkligen Querschnitt aufweist und wenigstens einen Teil einer Deckwand 72, 151, 246 und eine Seitenwand 70, 150, 248 des jeweiligen Adapters 36, 38, 40, 42, 44 bilden. Die Klappen 76, 146, 252 sind mittels in Längsrichtung des Adapters 36, 38, 40, 42, 44 verlaufenden Filmscharnieren 84, 148, 260 mit dem übrigen Teil des Adapters 36, 38, 40, 42, 44 gelenkig verbunden. Mit dem zum äußeren Ende des Wischblatts 12 weisenden Ende des Adapters 36, 38, 40, 42, 44 ist eine Lagerhülse 88 fest verbunden, die auf einem Lagerstift 28 des Anschlusselements 20 drehbar lagerbar ist. In geschlossenem Zustand der Klappe 76, 146, 252 wird die Lagerhülse 88 auf dem Lagerstift 28 durch die Klappe 76, 146, 252 axial fixiert.

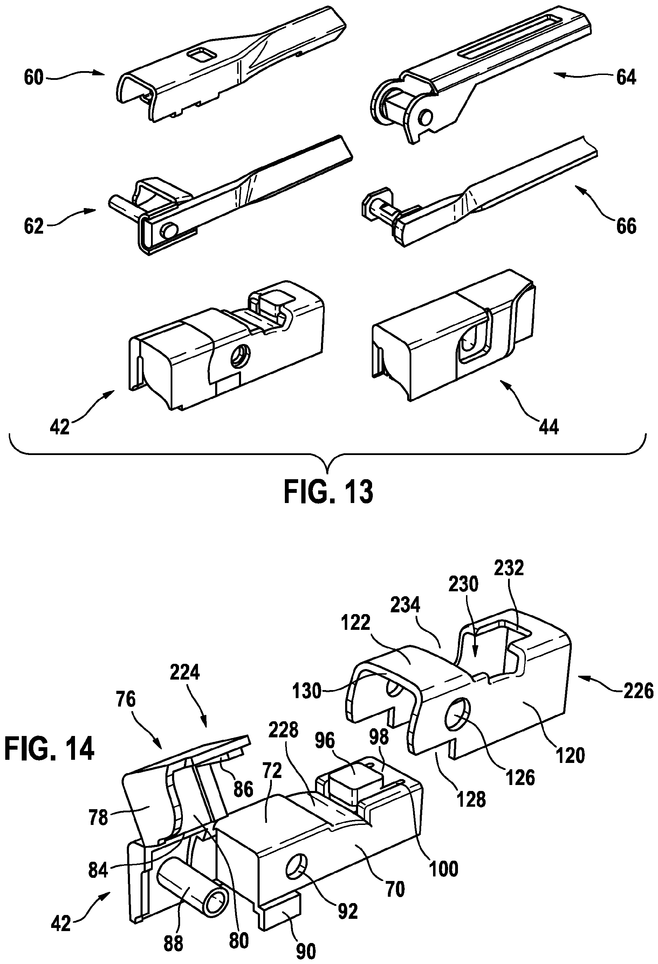

Die fünf Adapter 36, 38, 40, 42, 44 unterscheiden sich durch ihre Anschlussmöglichkeiten an elf verschiedene Verbindungselemente 46, 48, 50, 52, 54, 56, 58 (vgl. Fig. 1), 60, 62, 64, 66 (vgl. Fig. 13).

Das in Fig. 2 dargestellte Wischblatt 12 besitzt eine Wischleiste 14, die von einem Tragelement 16 in Form zweier parallel verlaufender flacher Federschienen aus Metall oder Kunststoff gehalten wird. Auf dem Tragelement 16 sind zu beiden Seiten des Anschlusselements 20, das über Krallen 24 am Tragelement 16 befestigt ist, Spoilerteile 18 montiert. Das Anschlusselement 20 besitzt einen in Längsrichtung verlaufenden Boden 22, an dessen zum äußeren Ende des Wischblatts 12 weisenden Ende ein Lagersteg 26 entgegengesetzt zu den Krallen 24 an einer Längsseite abgewinkelt ist und einen zur anderen Längsseite des Bodens 22 gerichteten Lagerstift 28 trägt. An der dem Lagersteg 26 gegenüberliegenden Längsseite des Bodens 22 ist zum inneren Ende des Wischblatts 12 versetzt ein zum Lagersteg 26 parallel verlaufender Seitensteg 30 angeformt. Dieser wird durch einen quer zum Boden 22 verlaufenden Spalt 34 unterteilt, wobei in dem zum äußeren Ende des Wischblatts 12 weisenden Teil eine Aussparung 32 vorgesehen ist, die sich in Richtung auf den Boden 22 zu verjüngt.

Der erste Adapter 36 besitzt ein im Wesentlichen u-förmiges Querschnittprofil, das von zwei Seitenwänden 70 und einer diese verbindenden Deckwand 72 gebildet wird. Der zum äußeren Ende des Wischblatts 12 weisende Frontteil 74 des ersten Adapters 36 wird im Bereich der Deckwand 72 und einer Seitenwand 70, die auf der Seite des Lagerstegs 26 des Anschlusselements 20 liegt, von der Klappe 76 gebildet, deren Seitenwand 82 ein Teil der Seitenwand 70 und deren Deckwand 80 einen Teil der Deckwand 72 des Adapters 36 bilden. Stirnseitig ist die Klappe 76 durch eine Stirnwand 78 begrenzt, deren freie Kante dem Profil des Spoilerteils 18 angepasst und mit Spiel an diesem anliegt, sodass eine Schwenkbewegung des ersten Adapters 36 um den Lagerstift 28 des Anschlusselements 20 möglich ist.

An der dem Lagersteg 26 gegenüberliegenden Seite des Adapters 36 ist an der Innenseite der Seitenwand 70 die Lagerhülse 88 befestigt, die bei geöffneter Klappe 76 auf den Lagerstift 28 geschoben wird. Danach wird die Klappe 76 geschlossen, wobei ihre Seitenwand 82 den Lagersteg 26 übergreift und somit die Lagerhülse 88 und den ersten Adapter 36 in Längsrichtung des Lagerstifts 28 sichert. Der erste Adapter 36 ist nunmehr um einen vorgegebenen Winkel relativ zum Wischblatt 12 um den Lagerstift 28 schwenkbar, wobei die Innenseite der Seitenwand 70, an dem die Lagerhülse 88 befestigt ist, an dem Seitensteg 30 seitlich geführt ist.

Das Grundelement 68 des Adapters 36 weist am Übergang zwischen der Klappe 76 und dem übrigen Adapter 36 eine Anlagekante 102 auf, die sich über die Seitenwände 70 und die Deckwand 72 erstreckt. Im Bereich der Seitenwände 70 bildet die Anlagekante 102 Taschen 86, in die die konvexe Stirnkante 112 des ersten Verbindungselements 46 eingreift, und somit die Klappe 76 im geschlossenen Zustand fixiert. Zum inneren Ende des Wischblatts 12 gegenüber der Anlagekante 102 versetzt ist mindestens in einer Seitenwand 70 des Grundelements 68 eine Lageröffnung 92 vorgesehen, der in einem Abstand ein Freiraum 94 folgt. Am inneren Ende des ersten Adapters 36 ist in seiner Deckwand 72 eine Federzunge 98 vorgesehen, die durch zwei längs gerichtete Schlitze 100 gebildet wird und eine nach außen gegenüber der Deckwand 72 vorstehende Taste 96 trägt.

Bei der Montage wird das erste Verbindungselement 46 stirnseitig auf den ersten Adapter 36 aufgeschoben, wobei seine zwei Seitenwände 106 mit einer diese verbindenden Deckwand 104 die Seitenwände 70 und die Deckwand 72 des ersten Adapters 36 umfassen und die Deckwand 104 die Taste 96 zurückdrücken, bis sie in der Endstellung in ein Rastloch 114 in der Deckwand des ersten Verbindungselements 46 einrastet. Das Verbindungselement 46 hat an seiner dem Tragelement 16 zugewandten Längskante Führungsstege 108, die die Seitenwände 70 des ersten Adapters 36 untergreifen. An dem zum äußeren Ende des Wischblatts 12 weisenden Teil des ersten Verbindungselements 46 besitzen die Seitenwände 106 Aussparungen 110, die zu Führungsstegen 90 passen, die sich in Längsrichtung an die Anlagekante 102 anschließen und als Anschläge dienen. Das erste Verbindungselement 46 besitzt außerdem ein Anschlussprofil 116 für einen nicht dargestellten Wischarm, das seitlich versetzt zum ersten Adapter 36 verläuft. Das erste Verbindungselement 46 kann so wie alle anderen Verbindungselemente 48 bis 66 an dem Wischarm angeformt sein oder als separates Bauteil fest mit diesem verbunden werden.

Die Anwendungsmöglichkeit des ersten Adapters 36 kann durch eine Abdeckkappe 118 erweitert werden. Diese kann am Grundelement 68 die Position des ersten Verbindungselements 36 einnehmen, indem ihre beiden Seitenwände 120 und die diese verbindende Deckwand 122 die Seitenwände 70 und die Deckwand 72 des Grundelements 68 umfassen. Dabei wird durch die Deckwand 122 während der Montage die Taste 96 zurückgedrückt, bis sie in der Endposition der Abdeckkappe 118 in eine Rastöffnung 124 in der Deckwand 122 der Abdeckkappe 118 einrastet. In der Endposition liegt eine Stirnkante 130 der Abdeckkappe 118, die im Bereich der Seitenwände 120 konvex ausgebildet ist, an der entsprechenden Anlagekante 102 an, wodurch die Klappe 76 in ihrer geschlossenen Position fixiert wird. In dieser Position befinden sich die Führungsstege 90 des Grundelements 68 in Aussparungen 128 der Abdeckkappe 118.

Die Abdeckkappe 118 besitzt ferner mindestens in einer Seitenwand 120 eine Lageröffnung 126, die mit der Lageröffnung 92 in der Seitenwand 70 des Grundelements 68 fluchtet. Dadurch wird es möglich, das zweite Verbindungselement 48 zu montieren, indem ein Lagerpin 138 in einer um ca. 90 Grad gegenüber dem Wischblatt 12 gedrehten Position in die Lageröffnungen 126, 92 geschoben wird und anschließend in die Betriebsposition zurückgeschwenkt wird. Das zweite Verbindungselement 48 besitzt ein Anschlussprofil 132 mit einem am Ende im Wesentlichen u-förmigen Querschnittprofil, das von zwei Seitenwänden 134 und einer diese miteinander verbindende Deckwand 136 gebildet wird. In den Seitenwänden 134 ist der Lagerpin 138 eingenietet. Zum inneren Ende des zweiten Verbindungselements 48 versetzt ist eine Brücke 140 angeformt, deren abgewinkeltes Ende 142 die Abdeckkappe 118 an der Außenseite der Seitenwand 120 erfasst und hält.

Eine Klappe 146 des zweiten Adapters 38 erstreckt sich über dessen gesamte Länge. Das Gleiche gilt für ein Filmscharnier 148, mit dem die Klappe 146 mit dem übrigen zweiten Adapter 38 gelenkig verbunden ist. Die Klappe 146 besitzt einen winkligen Querschnitt, der von einer Seitenwand 150 und zumindest einem Teil der Deckwand 151 gebildet wird. Stirnseitig wird die Klappe 146 durch eine Stirnwand 152 begrenzt, die zum Spoilerteil 18 eine Anschlussprofilkante aufweist. An der dem Lagersteg 26 abgewandten Seitenwand 144 ist die Lagerhülse 88 angeformt. An der gleichen Seitenwand 144 ist ein länglicher Halterahmen 156 vorgesehen, der zur Aufnahme eines dritten Verbindungselements 50 mit einem hakenförmigen Ende dient. Das Aufnahmeprofil 154 ist zweckmäßigerweise über eine Federzunge mit der Seitenwand 144 verbunden, sodass das hakenförmige Ende 162 spielfrei an den Seitenwänden 150 und 144 des zweiten Adapters 38 anliegt. Der kurze Schenkel 164 des hakenförmigen Endes 162 besitzt außerdem ein Rastloch 166. Dieses kann mit einem nicht dargestellten Rastzapfen des Aufnahmeprofils 154 zur Sicherung des dritten Verbindungselements 50 dienen. Ferner ist an der Innenseite der Seitenwand 144 ein Halterahmen 156 angeformt, der eine Längsverschiebung des hakenförmigen Endes 162 zum äußeren Ende des Wischblatts 12 hin begrenzt. Das dritte Verbindungselement 50 wird in Richtung der Pfeile 160 auf das Aufnahmeprofil 154 geschoben und anschließend durch die Klappe 146 gesichert, die in geschlossenem Zustand mit ihrer Seitenwand 150 den Lagersteg 26 übergreift.

Zur Aufnahme des vierten Verbindungselements 52 besitzt der zweite Adapter 38 am inneren Ende des als Hohlprofil gestalteten Aufnahmeprofils 154 ein Rastprofil 158, das mit dem Lagerpin 170 des vierten Verbindungselements 52 zusammenwirkt. Der Lagerpin 170 ist auf der dem zweiten Adapter 38 zugewandten Seite des vierten Verbindungselements 52 angeordnet und wird durch eine Öffnung 168 in der Seitenwand 150 der Klappe 146 in Richtung des Pfeils 160 in das Rastprofil 158 geschoben. Dabei verrastet eine Ringnut 174 in dem Rastprofil 158, wobei ein Kopfteil 172 bis in den Spalt 34 des Seitenstegs 30 des Anschlusselements 20 reichen kann.

Ein dritter Adapter 40 ist ähnlich aufgebaut wie der zweite Adapter 38. Auch hierbei erstreckt sich eine Klappe 146 über die gesamte Länge des Adapters 40 und ist über ein Filmscharnier 148 mit der Seitenwand 144 des Adapters 40 verbunden. Anstelle des Aufnahmeprofils 154 des zweiten Adapters 38 besitzt der dritte Adapter 40 einen Führungsblock 176, dessen Seitenwände 178 durch eine Deckwand 180 miteinander verbunden sind, wobei die Seitenwände 178 gegenüber der Deckwand 180 Überstände 182 bilden, die in Längsrichtung verlaufen und zwischen sich eine Führung für das siebte Verbindungselement 58 bilden.

Mit einem Abstand in Richtung zum äußeren Ende des Wischblatts 12 vor dem Führungsblock 176 ist im Bereich der Lagerhülse 88 eine zur Deckwand 151 der Klappe 146 offene Haltezange 196 vorgesehen, deren Schenkel 198 zwischen sich einen längs gerichteten Spalt 199 bilden und an ihren freien Enden Rastmittel aufweisen. Das fünfte Verbindungselement 54 besitzt ein Anschlussprofil 200, das am freien Ende einen im Wesentlichen u-förmigen Querschnitt aufweist. Dieser wird von zwei Seitenwänden 202 und einer diese miteinander verbindende Deckwand 204 gebildet. An der Stirnseite besitzt die Deckwand 204 eine angeformte, gekröpfte Lasche 210, die in montiertem Zustand zwischen den Schenkeln 198 der Haltezange 196 fixiert ist, wobei die Seitenwände 202 und die Deckwand 204 den Führungsblock 176 umfassen. Dabei liegen die dem Tragelement 16 zugewandten Kanten der Seitenwände 102 an Anlageborden 188 der Seitenwände 178 des Führungsblocks 176 an, während Vorsprünge 206 an den Seitenwänden 202 des fünften Verbindungselements 54 in Aussparungen 190 der Anlageborde 188 eingreifen und durch Hinterschneidungen 208 der Vorsprünge 206 an entsprechenden Schrägen 194 von Rastnocken 192 an den Anlageborden 188 gehalten werden.

Das sechste Verbindungselement 56 ist ähnlich dem fünften Verbindungselement 54. Anstelle der Hinterschneidungen 208 besitzen die Vorsprünge 206 der Seitenwände 202 etwa rechtwinklige Anschlagkanten 212, die mit Anschlagflächen 218 an den Rastnocken 192 zusammenwirken. Ferner besitzt die Deckwand 204 des sechsten Verbindungselements 56 eine Öffnung 214 mit einer zum äußeren Ende gerichteten Lasche 216. Die Öffnung 214 wirkt mit dem Rastloch 186 zusammen, wobei die Lasche 216 die ihr zugewandte Kante des Rastnockens 186 untergreift.

Das siebte Verbindungselement 58 bildet das Ende einer Wischstange. Es hat ein gekröpftes Ende 220 und zum inneren Ende hin versetzt ein Rastloch 222. Im montierten Zustand wird das gekröpfte Ende 220 von der Haltezange 196 gehalten, während der Rastnocken 186 in dem Rastloch 222 verrastet. Der Rastnocken 186 liegt im Bereich eines Vorsprungs 184 der Deckwand 180 des Führungsblocks 176.

Der vierte Adapter 42 ähnelt im Aufbau dem ersten Adapter 36. Er dient zum Anschluss des achten und neunten Verbindungselements 60 bzw. 62. Diese weisen mit dem ersten Verbindungselement 46 und dem zweiten Verbindungselement . 48 Ähnlichkeiten auf. Im Unterschied zum ersten Verbindungselement 46, dessen Anschlussprofil 116 zum Wischarm seitlich versetzt zum Wischblatt 12 verläuft, verläuft das achte Verbindungselement 60 in Richtung des Wischblatts 12. Ferner ist das neunte Verbindungselement 62 aus einer Wischstange gefertigt, die ein verdrilltes Ende 236 aufweist, wobei eine Breitseite der Stange dem vierten Adapter 42 zugewandt ist. Diese Breitseite wird von einem Schuh 238 umfasst, an dem eine Brücke 140 mit einem abgewinkelten Ende 142 angeformt ist. Der Schuh wird 238 durch einen im Wesentlichen parallel zur Brücke 140 verlaufenden Lagerpin 138, der zum freien Ende des neunten Verbindungselements 62 versetzt verläuft, mit dem verdrillten Ende 236 vernietet.

Zur Montage des achten Verbindungselements 60 wird nur das Grundelement 224 des vierten Adapters 42 benötigt. Dieses hat im Unterschied zum Grundelement 68 des ersten Adapters 36 eine in Richtung auf das äußere Ende hinter der Taste 96 liegende, quer verlaufende Vertiefung 228. Diese hat erst für die Montage des neunten Verbindungselements 62 eine Bedeutung. Das achte Verbindungselement 60 wird stirnseitig auf das Grundelement 224 geschoben, bis die zunächst zurückgedrückte Taste in das Rastloch 114 des achten Verbindungselements 60 einrastet. Im Übrigen ist der Montagevorgang wie beim ersten Verbindungselement 46.

Zur Montage des neunten Verbindungselements 62 tritt an die Stelle des achten Verbindungselements 60 eine Abdeckkappe 226. Sie besitzt ein im Wesentlichen u-förmiges Querschnittprofil, das durch zwei Seitenwände 120 und eine diese miteinander verbindende Deckwand 122 gebildet wird. Mindestens in einer Seitenwand 120 befindet sich eine Lageröffnung 126, die mit einer Lageröffnung 92 in den Seitenwänden 70 des Grundelements 224 in montiertem Zustand fluchtet. In der Deckwand 122 befindet sich eine quer verlaufende Öffnung 230, die sich bis in den Bereich der Seitenwände 120 erstreckt. Zum inneren Ende des vierten Adapters 42 erweitert sich die Öffnung 230 durch einen Öffnungsteil 232 für die Taste 96 des Grundelements 224. Das neunte Verbindungselement 62 wird in einer um ca. 90 Grad gedrehten Lage in Richtung des Lagerpins 138 in die Lageröffnungen 126, 92 geschoben und danach in die Betriebsstellung zurückgedreht. Dabei taucht die Brücke 140 durch die Öffnung 230 in die Vertiefung 228 des Grundelements, wobei das abgewinkelte Ende 142 der Brücke 140 im Bereich des Öffnungsteils 234 an der Außenseite der zugeordneten Seitenwand 70 des Grundelements 224 anliegt, sodass eine Schwenkbewegung ausschließlich zwischen der Lagerhülse 88 und dem Lagerstift 28 stattfindet.

Der fünfte Adapter 44 besitzt ein Grundelement 240 mit einem sich in Längsrichtung erstreckenden Führungsblock 244, der einen im wesentlich u-förmigen Querschnitt besitzt. Dieser wird von zwei Seitenwänden 248 gebildet, die durch eine Deckwand 246 miteinander verbunden sind. Im äußeren Bereich wird die Deckwand 246 und die Seitenwand 248 durch eine Klappe 252 gebildet, die eine Seitenwand 256 und eine Deckwand 254 sowie eine Stirnwand 258 besitzt. Die Deckwand 254 ist über ein Filmscharnier 260 mit einem Gehäuseteil 262 des fünften Adapters 44 verbunden. Gegenüber der Lagerhülse 88 zum inneren Ende versetzt, ist in dem Führungsblock 244 eine Lücke 250 vorgesehen, deren ebene Wände sich in Richtung auf das Tragelement 16 annähern. In diese Lücke 250 passt eine Profilwalze 268, deren Achse 266 in Führungswangen 264 des neunten Verbindungselements 62 vernietet ist. Die Führungswangen 264 bilden im Bereich der Profilwalze 268 vorstehende Ränder 270. Bei der Montage wird die Profilwalze 268 in die Lücke 250 eingesetzt und dort drehfest gehalten. Durch Schließen der Klappe 252 wird zum einen der fünfte Adapter 44 mit seiner Lagerhülse 88 auf dem Lagerstift 28 axial fixiert, zum anderen wird die Profilwalze 268 durch die zum inneren Ende des Wischblatts 12 verlängerte Deckwand 254 in der Lücke 250 gehalten.

Zur Montage des elften Verbindungselements 66 wird in den fünften Adapter 44 eine Abdeckkappe 242 eingesetzt. Sie besitzt zwei Seitenwände 272, die durch eine Deckwand 274 und eine offene Nabe 278 miteinander verbunden sind. Die offene Nabe 278 liegt am äußeren Ende der Abdeckkappe 242, während am entgegengesetzten Ende die Deckwand 274 zur besseren Handhabung eine Verlängerung 276 aufweist.

Die offene Nabe 278 hat eine Außenkontur 280, die der Lücke 250 entspricht, sodass sie in gleicher Weise wie das zehnte Verbindungselement 64 in die Lücke 250 des Führungsblocks 244 montiert werden kann. Bevor die Klappe 252 geschlossen wird, wird das elfte Verbindungselement 66 montiert. Es ist aus einer Wischstange gefertigt und besitzt ein verdrilltes Ende 286, bei dem eine Breitseite dem fünften Adapter 44 zugewandt ist. An dieser Seite ist ein Lagerpin 288 montiert, der an seinem freien Ende eine Riegelplatte 292 besitzt, die den Lagerpin 288 axial in der offenen Nabe 278 sichert. Der Lagerpin 288 besitzt auf entgegengesetzten Seiten Abflachungen 290, sodass er unter einer entsprechenden Drehung durch einen offenen Spalt 284 der offenen Nabe 278 geschoben werden kann, wobei der Spalt 284 schmaler ist als der Durchmesser des zylindrischen Teils 282 der offenen Nabe 278. Durch Verdrehen des elften Verbindungselements 66 in die Betriebslage wird der Lagerpin 288 in der offenen Nabe 278 verriegelt. Anschließend wird die Klappe 252 geschlossen, wobei die Deckwand 254 die offene Nabe 278 ein Stück weit überdeckt.

## Patentansprüche

1. Anschlussvorrichtung (10) zum gelenkigen Verbinden eines Verbindungselements (50, 52, 54, 56, 58) eines Wischarms mit einem Wischblatt (12), dessen Tragelement (16) mit einem Anschlusselement (20) der Anschlussvorrichtung (10) fest verbunden ist, wobei das Anschlusselement (20) mindestens einen in Längsrichtung verlaufenden Lagersteg (26) besitzt, der in das Innere eines zweiten oder dritten Adapters (38, 40) ragt und einen quer zur Längsrichtung verlaufenden Lagerstift (28) trägt, auf dem der zweite oder dritte Adapter (38, 40) durch Lagermittel (88) schwenkbar gelagert ist, wobei der zweite oder dritte Adapter (38, 40) lösbar mit dem Verbindungselement (50, 52, 54, 56, 58) verbunden ist, wobei der Lagersteg (26) an einer Längsseite eines Bodens (22) des Anschlusselements (20) nur in einem kurzen Bereich am äußeren Ende des Anschlusselements (20) angeformt ist und der Lagerstift (28) zur anderen Längsseite des Bodens (22) hin frei tragend am Lagersteg (26) befestigt ist, während ein Seitensteg (30) an der anderen Längsseite des Bodens (22) zum inneren Ende des Anschlusselements (20) versetzt angeformt ist, **dadurch gekennzeichnet, dass** mit dem zum äußeren Ende des Wischblatts (12) weisenden Ende des zweiten oder dritten Adapters (38, 40) eine Lagerhülse (88) fest verbunden ist, die auf dem Lagerstift (28) drehbar lagerbar ist und von einer im Querschnitt winkligen Klappe (146) überdeckt wird, die über ein in Längsrichtung des zweiten oder dritten Adapters (38, 40) verlaufendes Filmscharnier (148) mit dem übrigen Adapter (38, 40) gelenkig verbunden ist und im geschlossenen Zustand die Lagerhülse (88) axial auf dem Lagerstift (28) sichert, wobei sich die Klappe (146) des zweiten und dritten Adapters (38, 40) über die gesamte Länge des zweiten bzw. dritten Adapters (38, 40) erstreckt.

2. Anschlussvorrichtung (10) nach Anspruch 1, **dadurch gekennzeichnet, dass** der Seitensteg (30) durch einen senkrecht zum Tragelement (16) verlaufenden Spalt (34) geteilt ist.

3. Anschlussvorrichtung (10) nach Anspruch 2, **dadurch gekennzeichnet, dass** der Seitensteg (30) in dem zum äußeren Ende des Wischblatts (12) weisenden Teil eine Aussparung (32) aufweist.

4. Anschlussvorrichtung (10) nach einem der vorhergehenden Ansprüche, **dadurch gekennzeichnet, dass** an der Seitenwand (144) des zweiten Adapters (38), an der die Lagerhülse (88) angeformt ist, ein längliches Aufnahmeprofil (154) zur Aufnahme eines dritten hakenförmigen Verbindungselements (50) vorgesehen ist.

5. Anschlussvorrichtung (10) nach Anspruch 4, **dadurch gekennzeichnet, dass** das Aufnahmeprofil (154) einen Hohlraum aufweist, der an seinem inneren Ende ein quer verlaufendes Rastprofil (158) für die Aufnahme eines Lagerpins (170) eines vierten Verbindungselements (52) besitzt.

6. Anschlussvorrichtung (10) nach Anspruch 4 oder 5, **dadurch gekennzeichnet, dass** in der Seitenwand (150) der Klappe (146) des zweiten Adapters (38) eine Öffnung (168) vorgesehen ist, die im geschlossenen Zustand der Klappe (146) mit dem Rastprofil (158) fluchtet.

7. Anschlussvorrichtung (10) nach einem der Ansprüche 4 bis 6, **dadurch gekennzeichnet, dass** das Aufnahmeprofil (154) über eine Federzunge mit der Seitenwand (144) verbunden ist.

8. Anschlussvorrichtung (10) nach Anspruch 7, **dadurch gekennzeichnet, dass** mit Abstand zur äußeren Kontur des Aufnahmeprofils (154) ein Halterahmen (156) verläuft, der mit der Seitenwand (144) des zweiten Adapters (38) verbunden ist.

9. Anschlussvorrichtung (10) nach einem der vorhergehenden Ansprüche, **dadurch gekennzeichnet, dass** mit der Innenseite einer Seitenwand (144) des dritten Adapters (40) ein Führungsblock (176) verbunden ist, der mit seinen zwei Seitenwänden (178) und einer diese verbindenden Deckwand (180) ein im Wesentlichen u-förmiges Querschnittprofil bildet, wobei mit geringem Abstand zum Führungsblock (176) im Bereich der Lagerhülse (88) eine Haltezange (196) mit zwei Schenkeln (198) vorgesehen ist, die zwischen sich einen zur Deckwand (151) der Klappe (146) weisenden, längs verlaufenden Spalt (199) bilden.

10. Anschlussvorrichtung (10) nach Anspruch 9, **dadurch gekennzeichnet, dass** an den Außenseiten der Seitenwände (178) des Führungsblocks (176) an den zum Anschlusselement (20) weisenden Kanten Anlageborde (188) vorgesehen sind, die im Bereich ihres zum inneren Ende des Wischblatts (12) weisenden Endes jeweils eine Aussparung (190) mit einem Rast- und Anlagenocken (192) besitzen.

11. Anschlussvorrichtung (10) nach Anspruch 9 oder 10, **dadurch gekennzeichnet, dass** die Seitenwände (178) des Führungsblocks (176) gegenüber der Deckwand (180) Überstände (182) besitzen, die zwischen sich eine Längsführung bilden, an deren inneren Ende ein Rastnocken (186) angeordnet ist.

12. Wischblatt (12) mit einer Anschlussvorrichtung (10) nach einem der vorhergehenden Ansprüche.

13. Zweiter oder dritter Adapter (38, 40) einer Anschlussvorrichtung (10) nach einem der Ansprüche 1 bis 11.

## Claims

1. Connecting device (10) for connecting a joining element (50, 52, 54, 56, 58) of a wiper arm in an articulated manner to a wiper blade (12), the supporting element (16) of which is fixedly connected to a connecting element (20) of the connecting device (10), wherein the connecting element (20) has at least one bearing web (26) which runs in the longitudinal direction, projects into the interior of a second or third adapter (38, 40) and bears a bearing pin (28) which runs transversely with respect to the longitudinal direction and on which the second or third adapter (38, 40) is mounted pivotably by means of bearing means (88), wherein the second or third adapter (38, 40) is connected releasably to the joining element (50, 52, 54, 56, 58), wherein the bearing web (26) is integrally formed only in a short region at the outer end of the connecting element (20) on one longitudinal side of a base (22) of the connecting element (20), and the bearing pin (28) is fastened to the bearing web (26) in a self-supporting manner towards the other longitudinal side of the base (22), while a side web (30) is integrally formed on the other longitudinal side of the base (22) in a manner offset to the inner end of the connecting element (20), **characterized in that** a bearing sleeve (88) is fixedly connected to that end of the second or third adapter (38, 40) which faces the outer end of the wiper blade (12), said bearing sleeve being mountable rotatably on the bearing pin (28) and being covered by a flap (146) which is angled in cross section, is connected in an articulated manner via a film hinge (148) running in the longitudinal direction of the second or third adapter (38, 40) to the remaining adapter (38, 40) and, in the closed state, secures the bearing sleeve (88) axially on the bearing pin (28), wherein the flap (146) of the second and third adapter (38, 40) extends over the entire length of the second or third adapter (38, 40).

2. Connecting device (10) according to Claim 1, **characterized in that** the side web (30) is divided by a gap (34) running perpendicularly to the supporting element (16).

3. Connecting device (10) according to Claim 2, **characterized in that** the side web (30) has a recess (32) in the part pointing towards the outer end of the wiper blade (12).

4. Connecting device (10) according to one of the preceding claims, **characterized in that** an elongate receiving profile (154) for receiving a third, hook-shaped connecting element (50) is provided on that side wall (144) of the second adapter (38) on which the bearing sleeve (88) is integrally formed.

5. Connecting device (10) according to Claim 4, **characterized in that** the receiving profile (154) has a cavity which, at its inner end, has a transversely running detent profile (158) for receiving a bearing pin (170) of a fourth connecting element (52).

6. Connecting device (10) according to Claim 4 or 5, **characterized in that**, in the side wall (150) of the flap (146) of the second adapter (38), there is provided an opening (168) which, in the closed state of the flap (146), is aligned with the detent profile (158).

7. Connecting device (10) according to one of Claims 4 to 6, **characterized in that** the receiving profile (154) is connected to the side wall (144) by means of a spring tongue.

8. Connecting device (10) according to Claim 7, **characterized in that** a holding frame (156) runs spaced apart from the outer contour of the receiving profile (154), which holding frame is connected to the side wall (144) of the second adapter (38).

9. Connecting device (10) according to one of the preceding claims, **characterized in that** a guide block (176) is connected to the inner side of a side wall (144) of the third adapter (40), which guide block, with its two side walls (178) and a top wall (180) connecting said side walls, forms a substantially U-shaped cross-sectional profile, wherein a set of holding claws (196) is provided, with a small spacing to the guide block (176), in the region of the bearing sleeve (88), said set of holding claws having two limbs (198) which, between them, form a longitudinally running gap (199) which points towards the top wall (151) of the flap (146).

10. Connecting device (10) according to Claim 9, **characterized in that**, on the outer sides of the side walls (178) of the guide block (176), at the edges pointing towards the connecting element (20), there are provided abutment rims (188) which, in the region of their end pointing toward the inner end of the wiper blade (12), have in each case one recess (190) with a detent and abutment cam (192).

11. Connecting device (10) according to Claim 9 or 10, **characterized in that** the side walls (178) of the guide block (176) have protrusions (182) relative to the top wall (180), which protrusions between them form a longitudinal guide, at the inner end of which there is arranged a detent cam (186).

12. Wiper blade (12) having a connecting device (10) according to one of the preceding claims.

13. Second or third adapter (38, 40) of a connecting device (10) according to one of Claims 1 to 11.

## Revendications

1. Dispositif de raccordement (10) destiné à relier de manière articulée un élément de liaison (50, 52, 54, 56, 58) d'un bras d'essuie-glace avec un balai d'essuie-glace (12), dont l'élément portant (16) est relié fixement à un élément de raccordement (20) du dispositif de raccordement (10), l'élément de raccordement (20) possédant au moins un étai de palier (26) s'étendant dans la direction longitudinale, cet étai saillant à l'intérieur d'un deuxième ou troisième adaptateur (38, 40) et supportant une tige de palier (28) s'étendant transversalement à la direction longitudinale sur laquelle le deuxième ou troisième adaptateur (38, 40) est disposé de façon à pouvoir pivoter grâce aux moyens de palier (88), le deuxième ou troisième adaptateur (38, 40) étant relié de façon amovible à l'élément de liaison (50, 52, 54, 56, 58), l'étai de palier (26) étant formé au niveau d'un côté longitudinal d'un fond (22) de l'élément de raccordement (20) uniquement dans une zone courte, au niveau de l'extrémité extérieure de l'élément de raccordement (20), et la tige de palier (28) étant fixée à l'étai de palier (26), de façon librement portante, par rapport à l'autre côté longitudinal du fond (22), tandis qu'un étai latéral (30) est formé au niveau de l'autre côté longitudinal du fond (22), de façon décalée par rapport à l'extrémité intérieure de l'élément de raccordement (20), **caractérisé en ce qu'**une douille de palier (88) est reliée fixement à l'extrémité du deuxième ou troisième adaptateur (38, 40) orientée vers l'extrémité extérieure du balai d'essuie-glace (12), ladite douille étant disposée de façon à pouvoir tourner sur la tige de palier (28) et étant revêtue d'un clapet (146) formant un certain angle en section transversale, ledit clapet étant relié de façon articulée à l'adaptateur (38, 40) restant via une charnière-film (148) s'étendant dans la direction longitudinale du deuxième ou troisième adaptateur (38, 40) et sécurisant à l'état fermé la douille de palier (88) dans le plan axial sur la tige de palier (28), le clapet (146) du deuxième et troisième adaptateur (38, 40) s'étendant sur l'ensemble de la longueur du deuxième et/ou troisième adaptateur (38, 40).

2. Dispositif de raccordement (10) selon la revendication 1, **caractérisé en ce que** l'étai latéral (30) est séparé par une fente (34) s'étendant perpendiculairement à l'élément portant (16).

3. Dispositif de raccordement (10) selon la revendication 2, **caractérisé en ce que** l'étai latéral (30) comporte un évidement (32) dans la partie orientée vers l'extrémité extérieure du balai d'essuie-glace (12).

4. Dispositif de raccordement (10) selon l'une quelconque des revendications précédentes, **caractérisé en ce qu'**un profilé de logement (154) allongé est prévu au niveau de la paroi latérale (144) du deuxième adaptateur (38) au niveau duquel la douille de palier (88) est formée, pour loger un troisième élément de liaison (50) en forme de crochet.

5. Dispositif de raccordement (10) selon la revendication 4, **caractérisé en ce que** le profilé de logement (154) comporte un espace creux possédant au niveau de son extrémité intérieure un profilé d'encliquetage (158) s'étendant transversalement pour le logement d'une broche de palier (170) d'un quatrième élément de liaison (52).

6. Dispositif de raccordement (10) selon la revendication 4 ou 5, **caractérisé en ce qu'**une ouverture (168) s'alignant à l'état fermé du clapet (146) avec le profilé d'encliquetage (158) est prévue dans la paroi latérale (150) du clapet (146) du deuxième adaptateur (38).

7. Dispositif de raccordement (10) selon l'une quelconque des revendications 4 à 6, **caractérisé en ce que** le profilé de logement (154) est relié à la paroi latérale (144) via une languette à ressort.

8. Dispositif de raccordement (10) selon la revendication 7, **caractérisé en ce qu'**un cadre de maintien (156) relié à la paroi latérale (144) du deuxième adaptateur (38) s'étend à une certaine distance du contour extérieur du profilé de logement (154).

9. Dispositif de raccordement (10) selon l'une quelconque des revendications précédentes, **caractérisé en ce qu'**un bloc de guidage (176) est relié au côté intérieur d'une paroi latérale (144) du troisième adaptateur (40), ledit bloc formant, avec ses deux parois latérales (178) et une paroi de recouvrement (180) les reliant, un profilé de section transversale pour l'essentiel en forme de U, une pince de maintien (196) avec deux branches (198) étant prévue à une distance réduite par rapport au bloc de guidage (176) dans la région de la douille de palier (88), les branches formant entre elles une fente (199) s'étendant dans le plan longitudinal et orientée vers la paroi de recouvrement (151) du clapet (146).

10. Dispositif de raccordement (10) selon la revendication 9, **caractérisé en ce que** des bords d'appui (188) sont prévus au niveau des côtés extérieurs des parois latérales (178) du bloc de guidage (176) au niveau des arêtes orientées vers l'élément de raccordement (20), ces bords possédant dans la région de leur extrémité orientée vers l'extrémité intérieure du balai d'essuie-glace (12) respectivement un évidement (190) avec une came d'encliquetage et de butée (192).

11. Dispositif de raccordement (10) selon la revendication 9 ou 10, **caractérisé en ce que** les parois latérales (178) du bloc de guidage (176) possèdent des saillies (182) par rapport à la paroi de recouvrement (180), ces saillies formant entre elles un guidage longitudinal au niveau de l'extrémité intérieure duquel une came d'encliquetage (186) est disposée.

12. Balai d'essuie-glace (12) avec un dispositif de raccordement (10) selon l'une quelconque des revendications précédentes.

13. Deuxième ou troisième adaptateur (38, 40) de dispositif de raccordement (10) selon l'une quelconque des revendications 1 à 11.
